# EUROPEAN PATENT SPECIFICATION

(11) **EP 4 188 103 B1**
(45) Date of publication and mention of the grant of the patent: **09.10.2024**
(21) Application number: 21755902.0
(22) Date of filing: 26.07.2021
(51) Int. Cl.: A23G 1/04, A23G 1/12, A23G 1/46, A23G 1/00

(54) **PROCESS FOR MANUFACTURING A CHOCOLATE PRODUCT AND A CHOCOLATE PRODUCT PRODUCED USING THE PROCESS**
VERFAHREN ZUR HERSTELLUNG EINES SCHOKOLADENPRODUKTS UND MIT DEM VERFAHREN HERGESTELLTES SCHOKOLADENPRODUKT
PROCÉDÉ DE PRODUCTION D'UN PRODUIT DE CHOCOLAT ET PRODUIT DE CHOCOLAT PRODUIT À L'AIDE DU PROCÉDÉ

(30) Priority: 28.07.2020 GB 202011671
(43) Date of publication of application: 07.06.2023
(73) Proprietor: Kraft Foods Schweiz Holding GmbH, 6300 Zug (CH)
(72) Inventor: BROWN, Anthony, Birmingham West Midlands B30 2LU (GB); MENDL, Christian Johann, 28217 Bremen (DE); SIMBUERGER, Stephan, 28217 Bremen (DE); AWUAH, Gabriela, Birmingham West Midlands B30 2LU (GB); BROWN, David, Birmingham West Midlands B30 2LU (GB); PERRIE, Katie, Birmingham West Midlands B30 2LU (GB); MATHESON, Ian, Birmingham West Midlands B30 2LU (GB)
(74) Representative: Wilson Gunn
(86) International application number: PCT/EP2021/070825
(87) International publication number: WO 2022/023249

(56) References cited:
- EP-A1- 1 358 804
- WO-A1-95/18541
- CA-A1- 2 031 996
- CA-C- 2 031 996
- US-A- 4 925 695
- US-A- 5 464 649
- US-A- 5 849 353

## Description

### Technical Field of the Invention

The present invention relates generally to a process for the manufacture of a chocolate product in which a chocolate ingredient mixture containing no, or only small amounts of, cocoa liquor is subjected to a size-reduction process and the size reduced chocolate ingredient mixture later combined with cocoa liquor to produce a chocolate mass.

WO95/18541 discloses a method of manufacturing a chocolate product comprising mixing two mixtures. The first mixture comprises inulin, whole milk powder, cocoa butter and lecithin, wherein the first mixture is refined and conched. In parallel, the second mixture comprises cocoa liquor or mass, cocoa butter, flavourings and fructose, wherein the second mixture is refined and conched. The two mixtures are then blended. The cocoa liquor is added at the beginning of the conching step of the second mixture. There is no mention of adding at least some of the cocoa liquor during or after the liquefying phase of the conching step or after the conching step.

US5849353 discloses a method of manufacturing a chocolate product comprising mixing two ingredient mixtures. The first mixture comprises a dry paste of size reduced cocoa butter substitute and sugar and the second mixture comprises cocoa powder, emulsifier, non-fat milk solids, cocoa liquor, lactose and milk which is mixed and refined. The two mixtures are then combined and conched. There is no mention of adding at least some of the cocoa liquor after the conching step or during or after the liquefying phase of the conching step.

US5464649 discloses a method of manufacturing a chocolate product comprising mixing two ingredient mixtures. The first mixture comprises a dry paste of size reduced cocoa butter substitute and sugar, and the second mixture comprises refined cocoa liquor and lactose crystallised non-fat milk powder. The mixtures are then combined and conched. There is no mention of adding at least some of the cocoa liquor after the conching step or during or after the liquefying phase of the conching step.

US4925695 and CA2031996 disclose a method of manufacturing a chocolate product comprising combining sugar and cocoa butter and minimal amounts of water, then refining and conching the mixture before adding cocoa liquor and milk powder, mixing, refining and further conching the mixture for 4 hours. There is no mention of adding at least some of the cocoa liquor during or after the liquefying phase of the conching step. There is a 4 hour conching step after the cocoa liquor is added; therefore, the cocoa liquor is not added after the conching step and there is no mention of adding at least some of the cocoa liquor after the conching step.

EP1358804 discloses a method of manufacturing a chocolate product comprising adding the cocoa liquor at the start of the method. There is no mention of adding at least some of the cocoa liquor after the conching step or during or after the liquefying phase of the conching step.

### Background to the Invention

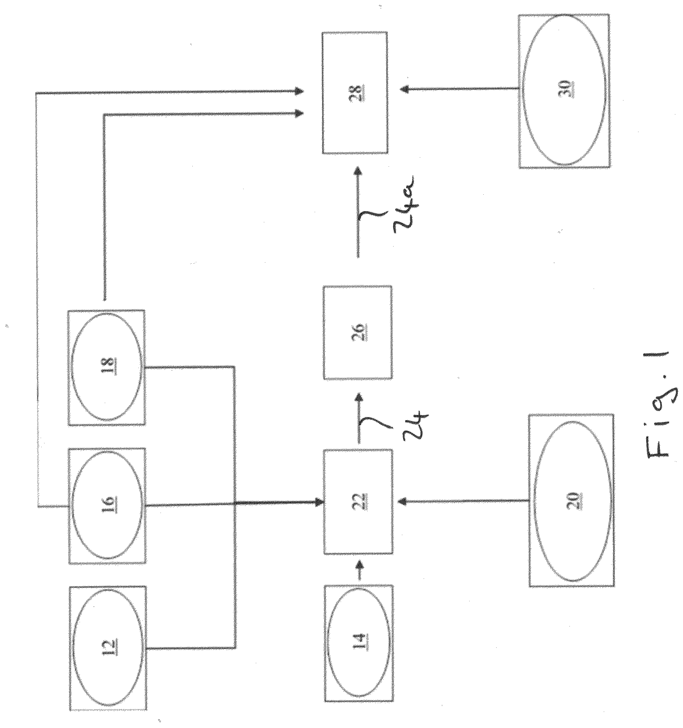

Figure 1 is a process flow diagram illustrating schematically a known batch process 10 for producing a milk chocolate. In the known batch process, chocolate ingredients including cocoa liquor 12, sugar 14, cocoa butter 16, anhydrous milk fat (AMF) 18 and skimmed milk powder 20 are combined in a mixer 22 to form a chocolate ingredient mixture 24. Other ingredients including flavouring, such as vanilla, may also be added to the chocolate ingredient mixture 24. The chocolate ingredient mixture 24 is subject to a size-reduction process 26 before being conched 28. In one known process, the chocolate ingredient mixture is refined to reduce particle size, with the chocolate ingredient mixture subject to a pre-refining stage and a main refining stage in a roll refiner. Conching 28 helps to further mix the size-reduced ingredient mixture 24a and develop the flavour, aroma and mouth feel of the chocolate in a known manner. The chocolate ingredient mixture 24a passes through a number of phases during conching. In an initial dry phase, the chocolate ingredient mixture is in powdery form, and the mixing coats the particles with fat. Air movement through the conche removes some moisture and volatile substances, which may give an acidic note to the flavour. The chocolate ingredient mixture subsequently transitions through a paste phase into a final liquid phase. Further ingredients may be added during conching. For example, the viscosity of the finished product can be adjusted by the addition of fats (such as further cocoa butter 16 and/or AMF 18) and/or emulsifiers, such as soya lecithin 30. Further flavouring can also be added depending on the intended use of the chocolate. The chocolate mass obtained using the known process is used in the formation of chocolate products which may be represented by solid chocolate tablets or bars as well as compounded or enrobed products such as chocolate coated wafers, chocolate-containing biscuits and the like. A similar process can be used to produce other types of chocolate by varying the ingredients used in the chocolate ingredient mixture as is known in the art. For example, to produce plain or dark chocolate the dairy ingredients may be omitted or reduced and different flavourings can be used.

All the solid materials, including cocoa liquor, are usually combined at the start of the chocolate making process and refined together so that the particle size of the non-fat cocoa solids is reduced, and the deleterious flavours in the cocoa liquor, such as acetic acid produced in the fermentation of the cocoa beans, is removed during the dry conching phase. However, the need to refine the cocoa liquor together with the other ingredients in the chocolate ingredient mixture limits the overall throughput of the process for a given batch size.

A further issue with the known process is that the presence of cocoa liquor 12 in the chocolate material mixture 24 is believed to be responsible for wear of the apparatus 26 when the mixture is being size-reduced. This is a particular issue where the mixture is refined using one or more roll refiners, where cocoa liquor causes wear of the refiner rolls.

It is desirable, therefore, to provide a process for the manufacture of chocolate which enables a higher yield for a given batch size whilst producing chocolate with broadly similar characteristics.

It is also desirable to provide a process for the manufacture of chocolate which results in less wear of the equipment used for size-reduction.

### Summary of the Invention

In a first aspect of the invention, there is provided a process for the manufacture of a chocolate product comprising;
a) performing a size-reduction step on a chocolate ingredient mixture comprising substantially no non-fat cocoa solids, and comprising more than 15 % wt. fat; and
b) adding cocoa liquor to the size-reduced chocolate ingredient mixture to form a chocolate mass;
wherein the size-reduced chocolate ingredient mixture is conched and at least some of the cocoa liquor is added to the size-reduced chocolate ingredient mixture during one or more of the following steps:
1) a liquefying phase of conching the size-reduced chocolate ingredient mixture;
2) later than a liquefying phase of conching the size-reduced chocolate ingredient mixture; and
3) after conching the size-reduced chocolate ingredient mixture.

For the purposes of the present invention, the term cocoa liquor is defined as the material produced from cocoa beans after the cocoa shell has been removed and the beans milled or ground, and also includes mixtures of non-fat cocoa solids (including cocoa powder) mixed with a fat (which may be, for example, cocoa butter or a non-cocoa butter fat, or any combination thereof) to produce a reconstituted cocoa liquor.

In an embodiment, no sucrose or milk ingredient is added with or mixed with the cocoa liquor when it is added to the size-reduced chocolate ingredient mixture during step 1), 2) or 3). In an embodiment, the cocoa liquor added to the size-reduced chocolate ingredient mixture in step 1), 2) or 3) may be added with or mixed with a fat and/or emulsifier, while in other embodiments it is added substantially alone, with no other ingredients.

In some embodiments at least 50%, 55%, 60%, 65%, 70%, 75%, 80%, 85%, 90%, 95%, 96%, 97%, 98%, 99% or 100% of the total amount of cocoa liquor is added during steps 1), 2) or 3). Adding a majority of the cocoa liquor during steps 1), 2) or 3), provides particularly stark advantages in manufacturing a chocolate product which has broadly similar characteristics as chocolate produced using known methods, whilst enabling significant cost reductions and enabling a higher yield for lower batch sizes.

The amount of non-fat cocoa solids in the cocoa liquor is preferably between 5 and 90 %wt. of the cocoa liquor, more preferably between 20 and 70 %wt. non-fat cocoa solids, or between 40 and 60 %wt. non-fat cocoa solids. The remaining fat in the cocoa liquor preferably comprises cocoa butter, but alternatively or additionally may comprise at least one other fat, such as a cocoa butter equivalent (CBE), a cocoa butter substitute (CBS), a vegetable fat, palm fat or the like, for example. In preferred embodiments the cocoa liquor is standard cocoa liquor comprising non-fat cocoa solids and cocoa butter, which may have up to 15%wt., 10%wt. or up to 5%wt. non-cocoa butter fat added.

It should be noted that the cocoa liquor may be added during step 2) to the conche, but without conching the resultant mixture of the size-reduced chocolate ingredient mixture and cocoa liquor during either a dry or liquid phase of conching. The cocoa liquor and conched size-reduced chocolate ingredient mixture may simply be mixed in the conche without conching the final mixture. In such embodiments the conche is acting as a standard mixer for step 2).

For step 3), the cocoa liquor may be added to the sized reduced and conched chocolate ingredient mixture in a further mixing stage after conching. The further mixing stage may be carried out in a mixing tank.

The size reduced and conched chocolate ingredient mixture makes up the majority of the final chocolate product and may comprise at least 50%, or at least 60%, or at least 70%, or at least 80%, or at least 85% of the final chocolate product.

Adding cocoa liquor to a chocolate ingredient mixture having at least 15 % wt. fat, after the liquefying phase of conching of the chocolate ingredient mixture has begun (or after conching), reduces wear on the conch, decreases energy use, and allows for increased yield, whilst surprisingly providing a final chocolate product which is substantially identical to one in which all of the ingredients are mixed and conched in known processes.

In a second aspect of the invention, there is provided a process for the manufacture of a chocolate product comprising;
a) performing a size-reduction step on a chocolate ingredient mixture including no more than 5 % wt. of cocoa liquor;
b) conching the size-reduced chocolate ingredient mixture; and
c) adding cocoa liquor to the conched mixture to form a chocolate mass.

In the processes of the second aspect of the invention, size-reducing a chocolate ingredient mixture with no or little cocoa liquor, followed by addition of cocoa liquor (or further cocoa liquor) after conching the chocolate ingredient mixture, reduces energy usage and wear on the conch while surprisingly providing a chocolate product substantially identical to one in which all cocoa liquor is added to the conch. In the process of the second aspect of the invention the chocolate ingredient mixture may comprises no, or substantially no, cocoa liquor when the size-reduction step is carried out.

In an embodiment according to the second aspect of the invention, the cocoa liquor is added to the sized reduced and conched chocolate ingredient mixture in the conch at the end of the conching stage. Alternatively, the cocoa liquor can be added to the sized reduced and conched chocolate ingredient mixture in a further mixing stage after conching, which may be carried out in a mixing tank.

In an embodiment according to either of the first or second aspects of the invention, the size reduced chocolate ingredient mixture is extruded after conching and the cocoa liquor is added to the size-reduce chocolate during extrusion.

In an embodiment according to either of the first or second aspects of the invention, the cocoa liquor is subject to processing before being added to the size-reduced chocolate ingredient mixture.

In an embodiment according to either for the first or second aspects of the invention, the cocoa liquor is sieved prior to being added to the size-reduced chocolate ingredient mixture to remove particles above a given size. The cocoa liquor may be sieved to remove particles having a size of at least 100 µm, or at least 95 µm, or at least 90 µm, or at least 85 µm, or at least 80 µm, or at least 75 µm, or at least 70 µm.

In an embodiment according to either of the first or the second aspects of the invention, the cocoa liquor is size-reduced separately from the chocolate ingredient mixture prior to being added to the size-reduced chocolate ingredient mixture. The cocoa liquor may be size reduced to have a specific particle size distribution. The cocoa liquor may be size reduced to have a specific particle size distribution having a D90 value in the range of 16-18 µm. In an embodiment, size-reduction of the cocoa liquor is carried out using a ball mill. In an embodiment, size-reduction of the cocoa liquor comprises refining, e.g. using a 3-roll or 5-roll refiner.

In a third aspect of the invention, there is provided a process for the manufacture of a chocolate product comprising:
a) performing a size-reduction step on a chocolate ingredient mixture including no more than 5 % wt. of cocoa liquor;
b) conching the size-reduced chocolate ingredient mixture;
c) ball milling cocoa liquor to reduce particle size and adding the ball-milled cocoa liquor to the size reduced chocolate ingredient mixture to form a chocolate mass.

Ball milling of the cocoa liquor followed by addition of the ball-milled cocoa liquor to the size-reduced chocolate ingredient mixture either during or after conching of the mixture, is believed to provide a chocolate product which is substantially identical to products made by known chocolate processes, whilst avoiding excessive wear on the machinery used to size-reduce the chocolate ingredient mixture and/or the conche, enabling energy reduction of the process, and ensuring maximum yield.

The ball milled cocoa liquor may be added to the size reduced chocolate ingredient mixture during conching. In an embodiment according to the third aspect of the invention, the ball milled cocoa liquor is added to the size-reduced chocolate ingredient mixture during a liquifying phase of conching. In a further embodiment according to the third aspect of the invention, the ball milled cocoa liquor is added to the size-reduced chocolate ingredient mixture both during a dry phase and during a liquifying phase of conching. In a still further embodiment according to the third aspect of the invention, the ball milled cocoa liquor is added to the size-reduced chocolate ingredient mixture at the end of or after conching. The ball milled cocoa liquor may be added to the size reduced chocolate ingredient mixture in the conche at the end of the conching process. In an alternative embodiment, the ball milled cocoa liquor is added to the size reduced and conched chocolate ingredient mixture in a separate mixing stage after conching, which separate mixing stage may be carried out in a mixing tank.

In the process according to any of the first, second or third aspects of the invention, size-reduction of the chocolate ingredient mixture may comprise grinding, milling, or refining of the chocolate ingredient mixture. In an embodiment, size-reduction of the chocolate ingredient mixture comprises refining and may be carried out using a roll refiner, such as a 3-roll or 5-roll refiner. The size reduction process may include a pre-refining stage.

In the process according to any of the first, second or third aspects of the invention, the chocolate ingredient mixture may comprise at least two ingredients selected from the group comprising a sweetener, a fat, a milk ingredient, cocoa butter (or any equivalent or substitute thereof) and flavouring.

In some embodiments the chocolate ingredient mixture may comprise sugar and/or other sweetener, cocoa butter or cocoa butter substitute, and AMF. The chocolate ingredient mixture may further comprise any one or more of the group comprising skimmed milk; sweet whey powder; and flavouring.

The process according to any of the first, second and third aspects of the invention may comprise adding further ingredients to the size-reduced chocolate ingredient mixture during conching including any one of more selected from the group comprising AMF; lecithin, such as soya lecithin, and/or other emulsifier; and flavouring.

In the process according to any of the first, second and third aspects of the invention, the coca liquor may consist substantially exclusively of cocoa liquor prior to addition to the chocolate ingredient mixture.

The process according to any of the first, second or third aspects of the invention may comprise tempering the chocolate mass after conching.

The process according to any of the first, second or third aspects of the invention may comprise extruding or moulding of the chocolate mass, which may be carried out after an optional tempering step.

The process according to any of the first, second and third aspects of the invention may be a batch process.

### Detailed Description of the Invention

In order that the invention may be more clearly understood, one or more embodiments thereof will now be described, by way of example only, with reference to the remaining drawings, of which:
- Figure 2: is a process flow diagram similar to figure 1 illustrating schematically a modified process for the manufacture of a chocolate product in accordance with aspects of the invention.
- Figure 3: is a schematic comparison of the final yield in chocolate production using the known process of figure 1 and the modified process according to aspects of the invention of figure 2 for a constant batch size.

Throughout this specification the term "chocolate" or "chocolate product" includes all chocolate or chocolate-like compositions with a fat phase or fat-like composition. The term is intended, for example, to include standardized and non-standardized chocolates, including dark chocolate, baking chocolate, milk chocolate, sweet chocolate, semi-sweet chocolate, buttermilk chocolate, skim-milk chocolate, mixed dairy product chocolate, low fat chocolate, aerated chocolates, compound coatings, non-standardized chocolates and chocolate-like compositions, unless specifically identified otherwise. Chocolate-like products include, for example, imitation chocolate that has cocoa butter replaced with other fats.

Throughout this specification, the term "cocoa liquor" should be understood as including liquor produced by the pressing, grinding and/or crushing of cocoa nibs, as well as liquor produced by pasting non-fat cocoa solids, such as cocoa powder, with cocoa butter and/or confectionery fat substitute for cocoa butter.

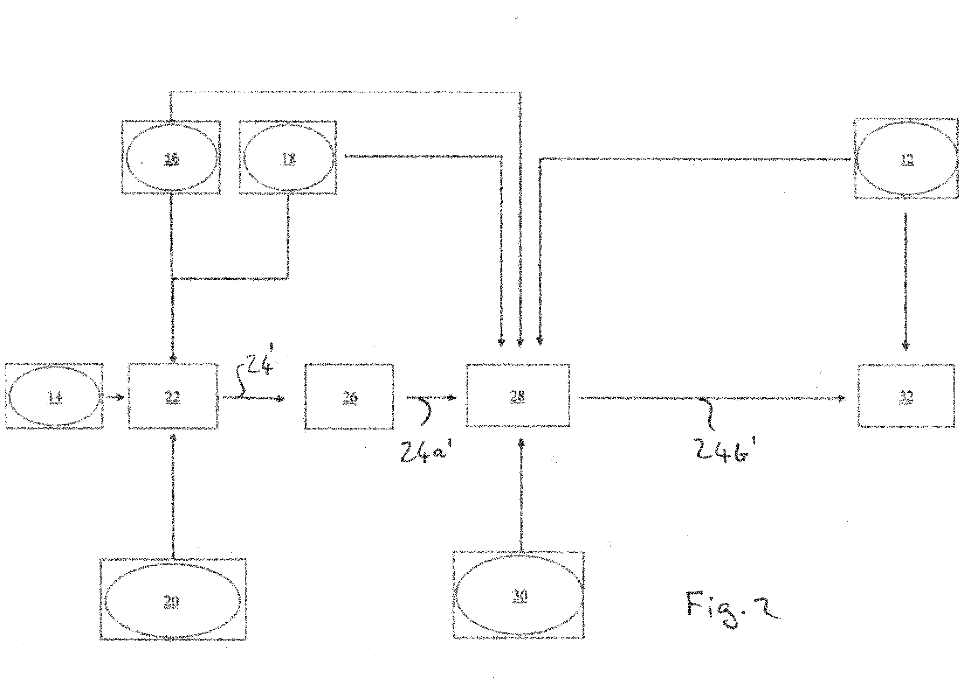

Figure 2 illustrates schematically an embodiment of a process 10' for manufacture of a chocolate product according to aspects of the invention. The process 10' is similar to the known process 10 described above, except that the cocoa liquor 12 is not included in the chocolate ingredient mixture 24' which is subjected to a size-reduction step 26 in a mixer/refiner. Instead, the cocoa liquor 12 is added to the size-reduced chocolate ingredient mixture 24a' subsequent to the size-reduction step 26. After refining, the chocolate ingredient mixture 24a' is conched and, as is illustrated in figure 2, the cocoa liquor 12 may be added to the size-reduced chocolate ingredient mixture 12a' in the conche, during or after the liquefying phase of conching, or it may be added to the size-reduced chocolate ingredient mixture 24a' after conching. Where the cocoa liquor 12 is added after conching, it may be combined with the size reduced and conched chocolate ingredient mixture 24b' in a separate mixing stage 32 which may be carried out in a mixing tank.

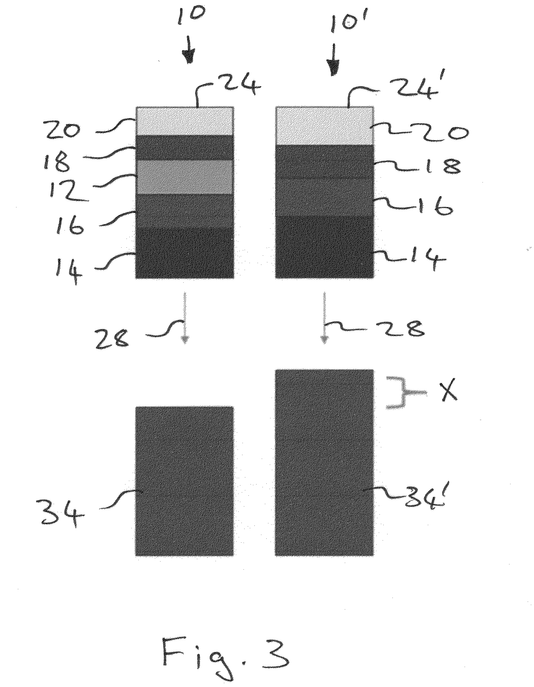

Cocoa liquor 12 has traditionally been included in the chocolate ingredient mixture at the start of the chocolate making process so that it is passed through the refiner 26 together with the majority of the other solids to reduce particle size and then conched 28, including during the dry phase of conching, in the belief that this was necessary to remove deleterious flavours in the cocoa liquor. However, the applicant has found that chocolate having similar characteristics and acceptable quality in terms of appearance, taste, aroma and mouth feel can be produced if the cocoa liquor 12 is added after the size-reduction step 26 and after the dry phase of conching. Removing the cocoa liquor 12 from the chocolate ingredient mixture 24' processed in the mixer/refiner 26 enables a higher yield in the finished cholate 34 to be produced for a given batch size of ingredients processed in the mixer/refiner 26. This is illustrated in figure 3, which compares graphically the amount finished chocolate 34, 34' produced for a batch size of 140kg of chocolate ingredient mixture 24, 24' using the known process 10 and the modified process 10' according to the invention. In the know process 10 on the left, a chocolate ingredient mixture 24 includes cocoa liquor 12. A batch of 140 kg of this mixture 24 is refined and then conched 28 to produce a finished chocolate product 34. In the modified process 10' in accordance with aspects of the present invention shown on the right, the chocolate ingredient mixture 24' subjected to the size reduction process 26 does not include cocoa liquor 12. This creates additional space so that the amounts of the other ingredients can be increased proportionally to maintain the same batch size of 140kg for processing in the mixer/refiner 26. The refined mixture 24a' is subsequently conched 28 and the cocoa liquor 12 added, either during or after the liquefying phase of conching. The amount of cocoa liquor 12 added may be increased proportionally with the other ingredients to maintain the same overall recipe. The use of increased amounts of the chocolate ingredients 14, 16, 18, 20 in the mixture 24' which is subjected to the size reduction process 26, as well as the corresponding increased amount of cocoa liquor 12 subsequently added, results in an increased amount of finished chocolate 34' in comparison to the known process. Tests by the applicant indicate that for a batch size of 140kg of the chocolate ingredient mixture size reduced in a 5-roll refiner and conched in a 200kg conche, an increase of around of 7 % in the finished chocolate yield is achievable using the modified process 10' according to aspects of the invention in comparison to the known process 10 in which the cocoa liquor is refined and/or conched together with the other dry ingredients.

A further advantage of the modified processes 10' according to aspects of the invention is that the absence of cocoa liquor 12 reduces wear on the apparatus 26 used for size reduction of the chocolate ingredient mixture 24'. This is particularly advantageous where the chocolate ingredient mixture is refined using a roll refiner. In this regard, it has been found to be particularly advantageous if the chocolate ingredient mixture 24' without cocoa liquor has a fat content of more than 15 % wt., or more than 20 % wt., or more than 25 % wt., as the fat liquefies and coats the other ingredients, avoiding friction as much as possible, during size-reduction.

The cocoa liquor may 12 may be added to the size-reduced chocolate ingredient mixture 24a' in the conche during the liquid phase. Addition of the cocoa liquor can also be split, with some cocoa liquor 12 being added in the dry phase and some in the liquid phase, as long as at least 75% of the cocoa liquor is added during the liquid phase; or with some cocoa liquor 12 being added in the liquid phase and some either at the end of conching or after conching.

In alternative embodiments, all of the cocoa liquor 12 is added to the chocolate ingredient mixture after conching. In this case, the cocoa liquor 12 can be added in the conche but after conching has been substantially completed. Alternatively, the cocoa liquor can be added to the conched chocolate ingredient mixture 24b' after it has left the conche in a further mixing stage 32. The further mixing stage could be carried out in a mixing tank, for example. In a still further alternative embodiment, the conched mixture 24b' is extruded and the cocoa liquor 12 is added either just prior to the mixture entering the extruder or whilst the mixture is in the extruder. In this embodiment, the extruder may be a screw extruder.

It is also within the scope of the invention that some cocoa liquor is added to the size-reduced chocolate ingredient mixture in the conche during the liquefying or later phases of conching and some after conching.

The cocoa liquor 12 added to the chocolate ingredient mixture may be processed and may be stripped to remove unwanted acidic volatiles and flavours.

Whilst cocoa liquor 12 used in the known process 10 generally has a relatively small particle size, around 21-25 µm, it has been found to be advantageous to sieve the cocoa liquor 12 prior to adding it to the size-reduced chocolate ingredient mixture 24a', 24b'. This removes particles at or above a given size depending on the sieve used and reduces the chances of larger cocoa particles in the cocoa liquor being present and detectable the finished cholate product 34'. In embodiments, the cocoa liquor 12 is sieved to remove particles having a size of at least 100 µm, or at least 95 µm, or at least 90 µm, or at least 85 µm, or at least 80 µm, or at least 75 µm, or at least 70 µm.

As an alternative to sieving or in addition, the coca liquor 12 may subjected to a size reduction operation separately from the chocolate ingredient mixture 24' before being added. In an embodiment, the cocoa liquor 12 is size-reduced to have a particle size distribution with a D90 value in the range of 16-18 µm. In a particularly advantageous embodiment, the cocoa liquor 12 is ball milled to reduce particle size.

The chocolate mass produced after conching may be subject to further optional processing, such as tempering.

The chocolate mass obtained using the processes of the invention, whether subject to optional processing steps after conching or not, can be used in the formation of chocolate products which may be represented by solid chocolate tablets or bars as well as compounded or enrobed products such as chocolate coated wafers, chocolate-containing biscuits and the like. The chocolate mass may be formed into chocolate product by any of the known means including moulding, extrusion and the like.

### Examples

### Comparative Example

As part of a trial, two batches of chocolate were produced using the known, standard process 10 for comparison with samples made using the modified process 10' according to aspects of the invention. For each standard batch, a chocolate ingredient mixture 24 was prepared from the following ingredients:

| Ingredient | Amount (wt.%) |
|---|---|
| Crystal Sugar | 50 |
| Cocoa Liquor | 11 |
| Cocoa Butter | 16 |
| Anhydrous Milk Fat | 1 |
| Skimmed Milk Powder | 22 |
| | |
| Total | 100 |

Refining - Flakes were prepared from the above components using a 5-roll refiner to produce a target particle size of 25 µm +/- 3.

Conching - Conching was carried out in a 200kg Elk (RTM) conche using 140kg of the refined chocolate ingredient mixture flakes. The following additions were made during conching:

| Ingredients Addition | Amount (wt. %) |
|---|---|
| Flakes | 92 |
| Fat (Cocoa Butter +/- Anhydrous Milk Fat) | 7 |
| Emulsifier | 1 |
| | |
| Total | 100 |

For the both standard batches, the conche was kept open throughout the dry phase and active conching of the cycle and then closed from the liquid phase till the end.

### Examples of the Invention

Initially, three samples were made using the modified process 10' in accordance with the invention, each using the same basic chocolate ingredient mixture 24' made from the following ingredients:

| Ingredient | Amount (wt.%) |
|---|---|
| Crystal Sugar | 54 |
| Cocoa Liquor | 0 |
| Cocoa Butter | 18 |
| Anhydrous Milk Fat | 5 |
| Skimmed Milk Powder | 23 |
| | |
| Total | 100 |

Refining - Flakes were prepared from the above components using a 5-roll refiner to produce a target particle size of 25 µm +/- 3.

In the modified chocolate ingredient mixture 24', the amounts of cocoa butter and anhydrous milk fat were modified to maintain a similar fat content to that of the chocolate ingredient mixture in the comparative sample. Those skilled in the art will understand that the fat content of the chocolate ingredient mixture can be modified for efficient processing in a roll refiner.

Conching - Conching of the size reduced modified chocolate ingredient mixture was carried out in a 200kg Elk (RTM) conche using 140g of the refined flakes of chocolate ingredient mixture 24'.

For all examples of the invention, the cocoa liquor 12 was passed through a 75 µm sieve before being added.

For all examples of the invention, the conche was kept open throughout the dry phase and active conching of the cycle and then closed from the liquid phase till the end.

During conching for all examples of the invention, the additions in the dry phase are added in a way to ensure that the phase is kept dry enough (also not too dry, to avoid formation of agglomerates) and an early collapse of the mass is avoided. This helps to prevent a non-homogenous and inefficient mixing of the mass during conching and a significant increase in viscosity in the finished chocolate.

In each of the initial three examples of the invention, the cocoa liquor was added in a different phase during or after conching as set out below.

### Example 1

Addition of cocoa liquor was split, with a first addition of 20% of the cocoa liquor in the dry phase and a second addition of the remaining 80% 0f the cocoa liquor in the liquid phase as set out in the table below:

| Ingredients Addition | Amount (wt. %) | Timing of Addition |
|---|---|---|
| Flakes | 86 | Dry Phase |
| Cocoa Liquor - 1^{st} addition | 2 | |
| Emulsifier | 0.2 | |
| Emulsifier | 0.8 | Liquid Phase |
| Fat (Cocoa Butter +/-Anhydrous Milk Fat) | 3 | |
| Cocoa Liquor - 2^{nd} addition | 8 | |
| | | |
| Total | 100 | |

### Example 2

Cocoa liquor was added during the liquid phase of conching only:

| Ingredients Addition | Amount (wt. %) | Timing of Addition |
|---|---|---|
| Flakes | 86 | Dry Phase |
| Fat (Cocoa Butter +/-Anhydrous Milk Fat) | 1 | |
| Emulsifier | 0.2 | |
| Emulsifier | 0.8 | Liquid Phase |
| Fat (Cocoa Butter +/-Anhydrous Milk Fat) | 2 | |
| Cocoa Liquor | 10 | |
| | | |
| Total | 100 | |

### Example 3

Cocoa liquor was added to the conche only during a final stage after conching was substantially complete or afte the conched chocolate ingredient mixture was removed from the conche and placed in a separate mixer:

| Ingredients Addition | Amount (wt. %) | Timing of Addition |
|---|---|---|
| Flakes | 86 | Dry Phase |
| Fat (Cocoa Butter +/-Anhydrous Milk Fat) | 1 | |
| Emulsifier | 0.2 | |
| Emulsifier | 0.8 | Liquid Phase |
| Fat (Cocoa Butter +/-Anhydrous Milk Fat) | 2 | |
| Cocoa Liquor | 10 | Final Phase or after conching |
| | | |
| Total | 100 | |

### Results

Sensory analysis of the finished chocolate 34, 34' was carried out in a qualitative round table. A few minor differences were perceived between the three examples of the invention and the comparative examples, but were generally within an acceptable range.

Overall differences were not significant and all the inventive examples were within reasonable limits of standard production variability. Accordingly, it was concluded that the point at which the cocoa liquor is added during the liquefying phase or at the end of conching, has little impact on the overall sensory profile of the finished chocolate mass.

### Further Examples of the Invention

In order to assess the effect of processing the cocoa liquor to reduce particle size prior to addition to the size-reduced chocolate ingredient mixture 24', the three inventive examples above were repeated but using a cocoa liquor ball milled to a particle size distribution (D90) in the range of 16-18 µm prior to being added to the refined chocolate ingredient mixture 24'.

### Results

The further examples were assessed in a round table sensory evaluation. All were determined to be acceptable and found to have significant depth of flavour, substantially matching chocolate produced by known processes.

The one or more embodiments are described above by way of example only. Many variations are possible without departing from the scope of protection afforded by the appended claims. For example, whilst size-reduction of the chocolate ingredient mixture using a roll refiner, especially a 5-roll refiner in the main refining stage, is thought to be advantageous, use of other means to size reduce the chocolate ingredient mixture is envisaged, including grinding and milling. The modified process 10' according to aspects of the invention can be adapted to produce a range of different types of chocolate for which cocoa liquor is an ingredient, including milk chocolate and plain or dark chocolate, by varying the ingredients used in the chocolate ingredient mixture, as is well known in the art.

## Claims

1. A process for the manufacture of a chocolate product comprising;
a. performing a size-reduction step on a chocolate ingredient mixture comprising no non-fat cocoa solids, and comprising more than 15 % wt. fat; and
b. adding cocoa liquor to the size-reduced chocolate ingredient mixture to form a chocolate mass.
wherein the size-reduced chocolate ingredient mixture is conched and at least some of the total amount of cocoa liquor is added to the size-reduced chocolate ingredient mixture during one or more of the following steps:
1) a liquefying phase of conching the size-reduced chocolate ingredient mixture;
2) later than a liquefying phase of conching the size-reduced chocolate ingredient mixture; and
3) after conching the size-reduced chocolate ingredient mixture.

2. A process as claimed in claim 1, wherein at least 75% of the total amount of cocoa liquor is added to the size-reduced chocolate ingredient mixture during one or more of steps 1), 2) and 3).

3. A process as claimed in claim 2, wherein substantially all cocoa liquor is added to the size-reduced chocolate ingredient mixture during one or more of steps 1), 2) and 3).

4. A process according to any one of the preceding claims wherein the size-reduction step comprises refining the chocolate ingredient mixture and may be carried out using a roll refiner, such as a 5-roll refiner.

5. A process according to any preceding claim, wherein the cocoa liquor is added to the size-reduced chocolate ingredient mixture during step 1) or 2).

6. A process according to claim 5, wherein the cocoa liquor is added to the size-reduced chocolate ingredient mixture during step 1).

7. A process according to any one of claims 1 to 4, wherein the cocoa liquor is added to the size-reduced chocolate ingredient mixture during step 3).

8. A process according to claim 7, wherein the cocoa liquor is added to the size-reduced chocolate ingredient mixture in a further mixing process after the chocolate ingredient mixture has left the conche.

9. A process according to any one of the preceding claims, wherein the cocoa liquor is sieved prior to being added to the size-reduced chocolate ingredient mixture.

10. A process according to any one of the preceding claims, wherein a size-reduction step is performed on the cocoa liquor prior to it being added to the size-reduced chocolate ingredient mixture.

11. A process according to claim 10, wherein the cocoa liquor is size-reduced to have a particle size distribution with a D90 value in the range of 16-18 µm.

12. A process according to any one of claims 10 to 11, wherein the size-reduction step is carried out using a ball mill.

13. A process according to any one of the preceding claims, wherein the chocolate ingredient mixture comprises sugar and/or other sweetener, cocoa butter, and a milk ingredient.

14. A process according to any one of the preceding claims, wherein the cocoa liquor comprises between 5 and 95 %wt. non-fat cocoa solids, preferably between 20 and 70 %wt. non-fat cocoa solids, or between 40 and 60 %wt. non-fat cocoa solids.

## Patentansprüche

1. Verfahren zum Herstellen eines Schokoladenprodukts, umfassend:
a. Durchführen eines Größenreduzierungsschritts an einer Schokoladenzutatenmischung, umfassend keine fettfreien Kakaofeststoffe, umfassend und mehr als zu 15 Gew.-% Fett; und
b. Hinzufügen von Kakaomasse zu der verkleinerten Schokoladenzutatenmischung, um eine Schokoladenmasse auszubilden.
wobei die verkleinerte Schokoladenzutatenmischung conchiert wird und mindestens ein Teil der Gesamtmenge an Kakaomasse der verkleinerten Schokoladenzutatenmischung während eines oder mehrerer der folgenden Schritte hinzugefügt wird:
1) einer Verflüssigungsphase des Conchierens der verkleinerten Schokoladenzutatenmischung;
2) nach einer Verflüssigungsphase des Conchierens der verkleinerten Schokoladenzutatenmischung; und
3) nach dem Conchieren der verkleinerten Schokoladenzutatenmischung.

2. Verfahren nach Anspruch 1, wobei mindestens 75 % der Gesamtmenge an Kakaomasse zu der verkleinerten Schokoladenzutatenmischung während eines oder mehrerer der Schritte 1), 2) und 3) hinzugefügt werden.

3. Verfahren nach Anspruch 2, wobei im Wesentlichen die gesamte Kakaomasse zu der verkleinerten Schokoladenzutatenmischung während eines oder mehrerer der Schritte 1), 2) und 3) hinzugefügt wird.

4. Verfahren nach einem der vorstehenden Ansprüche, wobei der Verkleinerungsschritt das Raffinieren der Schokoladenzutatenmischung umfasst und unter Verwendung eines Walzenraffinierers, wie eines 5-Walzenraffinierers, ausgeführt werden kann.

5. Verfahren nach einem der vorstehenden Ansprüche, wobei die Kakaomasse zu der verkleinerten Schokoladenzutatenmischung während Schritt 1) oder 2) hinzugefügt wird.

6. Verfahren nach Anspruch 5, wobei die Kakaomasse zu der verkleinerten Schokoladenzutatenmischung während Schritt 1) hinzugefügt wird.

7. Verfahren nach einem der Ansprüche 1 bis 4, wobei die Kakaomasse zu der verkleinerten Schokoladenzutatenmischung während Schritt 3) hinzugefügt wird.

8. Verfahren nach Anspruch 7, wobei die Kakaomasse zu der verkleinerten Schokoladenzutatenmischung in einem weiteren Mischverfahren hinzugefügt wird, nachdem die Schokoladenzutatenmischung die Conche verlassen hat.

9. Verfahren nach einem der vorstehenden Ansprüche, wobei die Kakaomasse gesiebt wird, bevor sie zu der verkleinerten Schokoladenzutatenmischung hinzugefügt wird.

10. Verfahren nach einem der vorstehenden Ansprüche, wobei ein Verkleinerungsschritt an der Kakaomasse durchgeführt wird, bevor sie zu der verkleinerten Schokoladenzutatenmischung hinzugefügt wird.

11. Verfahren nach Anspruch 10, wobei die Kakaomasse verkleinert wird, um eine Partikelgrößenverteilung mit einem D90-Wert in dem Bereich von 16-18 µm aufzuweisen.

12. Verfahren nach einem der Ansprüche 10 bis 11, wobei der Verkleinerungsschritt unter Verwendung einer Kugelmühle ausgeführt wird.

13. Verfahren nach einem der vorstehenden Ansprüche, wobei die Schokoladenzutatenmischung Zucker und/oder andere Süßstoffe, Kakaobutter und eine Milchzutat umfasst.

14. Verfahren nach einem der vorstehenden Ansprüche, wobei die Kakaomasse zu zwischen 5 und 95 Gew.-% fettfreie Kakaofeststoffe, vorzugsweise zu zwischen 20 und 70 Gew.-% fettfreie Kakaofeststoffe oder zu zwischen 40 und 60 Gew.-% fettfreie Kakaofeststoffe umfasst.

## Revendications

1. Processus pour la production d'un produit de chocolat, comprenant ;
a. la réalisation d'une étape de réduction de taille d'un mélange d'ingrédients de chocolat ne comprenant pas de solides de cacao non gras et comprenant plus de 15 % en poids de matières grasses ; et
b. l'ajout de liqueur de cacao au mélange d'ingrédients de chocolat à taille réduite pour former une pâte de chocolat.
dans lequel le mélange d'ingrédients de chocolat à taille réduite est conché et au moins une partie de la quantité totale de liqueur de cacao est ajoutée au mélange d'ingrédients de chocolat à taille réduite au cours d'une ou de plusieurs des étapes suivantes :
1) une phase de liquéfaction par conchage du mélange d'ingrédients de chocolat à taille réduite ;
2) après une phase de liquéfaction par conchage du mélange d'ingrédients de chocolat à taille réduite ; et
3) après le conchage du mélange d'ingrédients de chocolat à taille réduite.

2. Processus selon la revendication 1, dans lequel au moins 75 % de la quantité totale de liqueur de cacao est ajoutée au mélange d'ingrédients de chocolat à taille réduite au cours d'une ou de plusieurs des étapes 1), 2) et 3).

3. Processus selon la revendication 2, dans lequel la quasi-totalité de la liqueur de cacao est ajoutée au mélange d'ingrédients de chocolat à taille réduite au cours d'une ou de plusieurs des étapes 1), 2) et 3).

4. Processus selon l'une quelconque des revendications précédentes, dans lequel l'étape de réduction de taille comprend le raffinage du mélange d'ingrédients de chocolat et peut être réalisée à l'aide d'un raffineur à rouleaux, tel qu'un raffineur à 5 rouleaux.

5. Processus selon l'une quelconque des revendications précédentes, dans lequel la liqueur de cacao est ajoutée au mélange d'ingrédients de chocolat à taille réduite au cours de l'étape 1) ou 2).

6. Processus selon la revendication 5, dans lequel la liqueur de cacao est ajoutée au mélange d'ingrédients de chocolat à taille réduite au cours de l'étape 1).

7. Processus selon l'une quelconque des revendications 1 à 4, dans lequel la liqueur de cacao est ajoutée au mélange d'ingrédients de chocolat à taille réduite au cours de l'étape 3).

8. Processus selon la revendication 7, dans lequel la liqueur de cacao est ajoutée au mélange d'ingrédients de chocolat à taille réduite dans un processus de mélange supplémentaire après que le mélange d'ingrédients de chocolat a quitté la conche.

9. Processus selon l'une des revendications précédentes, dans lequel la liqueur de cacao est tamisée avant d'être ajoutée au mélange d'ingrédients de chocolat à taille réduite.

10. Processus selon l'une quelconque des revendications précédentes, dans lequel une étape de réduction de taille est effectuée sur la liqueur de cacao avant qu'elle ne soit ajoutée au mélange d'ingrédients de chocolat à taille réduite.

11. Processus selon la revendication 10, dans lequel la liqueur de cacao est réduite en taille pour avoir une distribution de taille de particules avec une valeur D90 comprise entre 16 et 18 µm.

12. Processus selon l'une quelconque des revendications 10 à 11, dans lequel l'étape de réduction de taille est réalisée à l'aide d'un broyeur à billes.

13. Processus selon l'une quelconque des revendications précédentes, dans lequel le mélange d'ingrédients de chocolat comprend du sucre et/ou un autre édulcorant, du beurre de cacao et un ingrédient laitier.

14. Processus selon l'une quelconque des revendications précédentes, dans lequel la liqueur de cacao comprend entre 5 et 95 % en poids de solides de cacao non gras, de préférence entre 20 et 70 % en poids de solides de cacao non gras, ou entre 40 et 60 % en poids de solides de cacao non gras.
